# EUROPEAN PATENT SPECIFICATION

(11) **EP 3 723 472 B1**
(45) Date of publication and mention of the grant of the patent: **12.11.2025**
(21) Application number: 18830532.0
(22) Date of filing: 10.12.2018
(51) Int. Cl.: A01G 25/02

(54) **DRIP EMITTER**
VORRICHTUNG ZUR ABGABE VON TROPFEN
EMETTEUR DE GOUTTES

(30) Priority: 12.12.2017 US 201762597701 P
(43) Date of publication of application: 21.10.2020
(73) Proprietor: Netafim Ltd., 67892 Tel Aviv (IL)
(72) Inventor: SOCOLSKY, Esteban, 85420 Kibbutz Hatzerim (IL); KEREN, Ron, 85420 Kibbutz Hatzerim (IL)
(74) Representative: Vossius & Partner Patentanwälte Rechtsanwälte mbB
(86) International application number: PCT/IB2018/059840
(87) International publication number: WO 2019/116206

(56) References cited:
- WO-A1-2017/093882
- WO-A1-2017/098858
- WO-A1-2017/103926
- WO-A1-95/29761
- US-A1- 2012 097 254
- US-A1- 2015 090 815
- US-A1- 2016 295 816
- US-A1- 2018 359 962

## Description

### TECHNICAL FIELD

Embodiments of the invention relate to drip emitters typically for use in irrigation.

### BACKGROUND

Membranes can be used for various purposes in irrigation drip emitters in connection to waterways formed in the emitter. For example, a membrane may be used for controlling the flow rate of water discharged by the emitter, for sealing between parts of the emitter, for defining valves in the emitter and/or for defining flow-paths within the emitter.

In control of flow rate, for example, the membrane operates to control liquid flow out of the emitter so that it is substantially independent of pressure at an inlet of the emitter for a range of pressures typically encountered in irrigation applications. For this purpose, the membrane is normally located between inlet and outlet waterways of the emitter and in response to increase in pressure of the entering water undergoes distortion that operates to increase resistance to liquid flow through and out of the emitter.

US Patent no. 4210287 discloses an emitter unit provided with a resiliently flexible membrane, which is releasably retained within a body member so as to serve a double function. On the one hand, whilst being exposed to the irrigation flow pressure in the conduit to serve in exercising differential pressure control, and, on the other hand, to define, with respect to a flow restricting waterway groove formed in the body member, a flow-restricting waterway flowpath. WO 95/29761 A1 describes an irrigation device including an inlet receiving water under pressure, a water collection and releasing mechanism coupled to the inlet for collecting a quantity of water and subsequently releasing at least part of the quantity of water to the atmosphere, the compressible diaphragm and flow control apparatus governing the supply of water from the inlet to the water collection and releasing mechanism.

WO 2017/093882 A1 describes a drip emitter that includes a frame, that can be made of plastic, and a membrane, that can be elastomeric; and both the frame and the membrane are formed by injection molding and are attached to each other.

US 2012/097254 A1 describes an apparatus that is supplied for a self-adjusting regulator suited for an irrigation emitter. A curved flow channel is integrated into a concave dome shaped surface. A deformable member deforms to approach the surface to adjust the resistance to flow. The concave dome shaped surface may match a deformed shape of the membrane. Irregularities in the interface between the surface and the deformable member are configured to achieve a desired discharge under varying flow conditions.

US 2015/090815 A1 describes a pressure compensating drip emitter for controlling fluid flow through a hole in an irrigation line includes an enclosing sidewall that has two ends, surrounds a volume, and is formed with an internal ledge between the ends to support an elastomeric membrane. A pressure-reducing fluid passageway that is formed as a labyrinth is provided that includes an outer, annular portion that is in fluid communication with an emitter inlet and an inner annular portion that is in fluid communication with an emitter outlet. The membrane is deformable between a first low-pressure membrane configuration which allows fluid to bypass the inner annular portion in flowing from the outer portion to the outlet.

Provision of drip emitters that are less expensive is desirable and one way of providing same may be to design a drip emitter from a single part, which thus requires less or substantially no assembly steps to be completed for use. In particular, provision of such a single part drip emitter may be beneficial in drip emitters that are made from different type materials, such as pressure regulated drip emitters that typically include a plastic body and an elastic membrane for assisting in the pressure regulation.

### SUMMARY

The subject-matter of the present invention is defined by the features of independent claim 1. Further preferred embodiments according to the present invention are defined in the dependent claims. The following embodiments and aspects thereof are described and illustrated in conjunction with systems, tools and methods which are meant to be exemplary and illustrative, not limiting in scope.

In an embodiment there is provided a flexible membrane for a drip emitter, wherein the membrane in a non-stressed or non-flexed state comprises a non-planar portion.

Such membrane may be suitable for use in drip emitters formed in a bi-component molding process where the membrane may be formed from a material that is different to material(s) in remaining parts of the emitter.

Preferably, such drip emitters may be formed form two parts where the membrane is formed in a first part (possibly within a frame of the first part) and the other second part may be formed with a recess that when overlaid by the membrane forms a regulating chamber of the emitter.

Possibly, the non-planar portion comprises a generally free-form shape and/or it comprises a generally plane curve shape, preferably a smooth plane curve shape.

In an embodiment there is also or in addition provided a drip emitter comprising body and flap members connected at a hinge, the body and/or flap members being arranged to be pivoted about the hinge towards each other to form an operative state of the emitter suitable for performing drip irrigation, wherein when first pivoting the body and/or flap members one towards the other to form the operative state, and then leaving the members free to flex back away from each other to reach a relative open state; an included angle formed between the two members in the relative open state is configured to be less than about 35 degrees, and preferably less than about 30 degrees.

In addition to the exemplary aspects and embodiments described above, further aspects and embodiments will become apparent by reference to the figures and by study of the following detailed descriptions.

### BRIEF DESCRIPTION OF THE FIGURES

Exemplary embodiments are illustrated in referenced figures. It is intended that the embodiments and figures disclosed herein are to be considered illustrative, rather than restrictive. The invention, however, both as to organization and method of operation, together with objects, features, and advantages thereof, may best be understood by reference to the following detailed description when read with the accompanying figures, in which:
**Fig. 1** schematically shows a drip emitter in accordance with an embodiment of the present invention in an open state;
**Figs. 2A and 2B** schematically show a closed operative state of the drip emitter of Fig. 1, from respective bottom and upper sides;
**Fig. 3** schematically shows a cross sectional view of a drip emitter generally similar to that in Fig. 1 in its open state;
**Figs. 4A and 4B** schematically show cross sectional views, respectively, of a regulating chamber of an embodiment of a drip emitter of the invention and a molding step for forming a membrane embodiment defining said chamber;
**Figs. 5A to 5C** schematically show cross sectional views of various membrane embodiments of the invention;
**Figs. 6A and 6B** schematically show, respectively, an example of a drip emitter and a membrane not covered by the claims and possibly used in this drip emitter; and
**Figs. 7A and 7B** schematically show a cross sectional view of a hinge area of an embodiment of a drip emitter not covered by the claims but generally similar to those in Figs. 1 to 3 or 6 in respective closed and relative open states.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated within the figures to indicate like elements.

### DETAILED DESCRIPTION

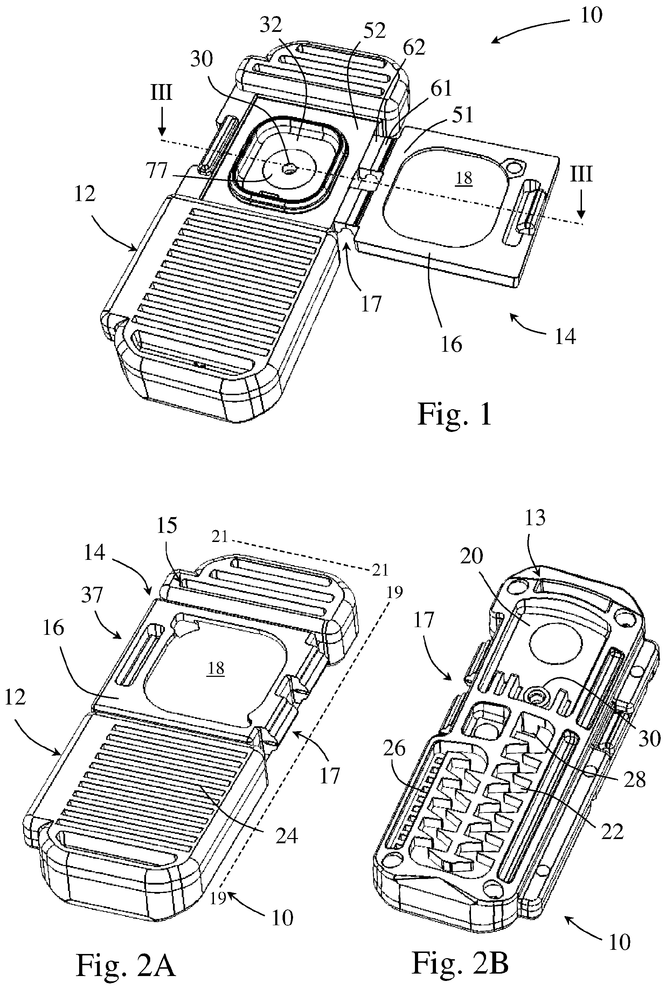

Attention is first drawn to Fig. 1, 2A and 2B illustrating an embodiment of a drip emitter 10 of the invention in respective open (Fig. 1) and closed (Figs. 2A and 2B) states. Emitter 10 has a body 12 and a flap 14 that are both connected at a hinge 17 to form a housing 7 of the emitter. Body 12 and flap 14 include respective body and flap regions 52, 51 on opposing sides of hinge 17 - and pivoting of flap 14 and/or body 12 towards each other about hinge 17 forms an operative closed state of the emitter suitable for use.

In the operative state, body region 52 and flap region 51 are brought closer together to form an abutment or close to abutment relationship. An emitter may be secured in such closed operative state by respective fixation means 37 located both on flap 14 and body 12, which are configured to engage each other to maintain/secure the emitter in its closed operative state.

Body 12 may be formed by injection molding from Polyolefin materials typically used in production of drip emitters, such as preferably Polyethylene (PE). Flap 14 may include a frame 16 formed possibly from similar, preferably identical, material as body 12, and possibly molded together with body 12 during its production to optionally form hinge 17 as a living hinge.

In accordance with an aspect of the invention, emitter 10 may include a diaphragm or membrane 18 located within frame 16. Membrane 18 may preferably be formed within frame 16 during the production of the emitter by injection molding, preferably from a more flexible and/or elastic material than body 12, possibly from a thermoplastic elastomer (TPE). In various embodiments of the invention, the frame may be injected prior to the membrane that is then molded thereupon; or the membrane may be injected prior to the frame that is then molded thereupon, or the frame and membrane may be molded substantially together at the same time.

The emitter parts/elements, e.g., membrane, body and flap - may be formed in the same mold apparatus by injecting each time one or more of the parts into cavities within the mold. Possibly such mold may include moving segments forming during a molding procedure various cavities into which molten material forming the various emitter parts/elements may be injected. Thus, a molding technology possibly utilized for forming at least certain emitter embodiments of the invention - may be considered as bi-component or multi-component molding technology - where several components/parts of an emitter may be molded in a single mold apparatus. In some cases, also single component molding technology may be used, where a mold may be deigned to include a single cavity into which all parts of the emitter may be injected. Martials suitable for such single component option may include TPE materials e.g. TPE of SEBS type.

Emitter 10 in its closed operative state includes an outer side 13 (see Fig. 2B) that is configured to attach possibly by heat bonding (or the like) to an inner face of an irrigation pipe (not shown); and an inner side 15 (see Fig. 2A) that is configured to face into the pipe to be exposed to pressurized liquid and/or substances flowing through the pipe.

The emitter's outer side 13 in this optional example includes an exit pool 20 and a labyrinth 22. Labyrinth 22 is here arranged to receive liquid entering the emitter via an inlet 24, in this example in the form of a filter, formed in inner side 15. The liquid entering the emitter passes via an entry 26 to outer side 13 in order to flow onwards downstream via labyrinth 22.

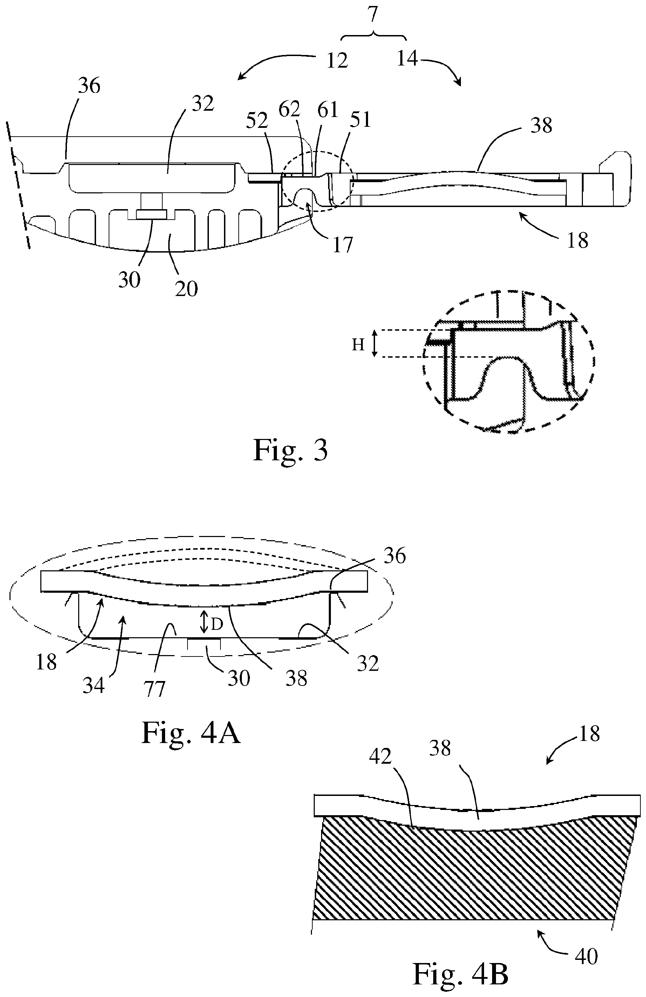

Labyrinth 22 has an ending 28 via which liquid can pass back downwards into a recess 32 (see recess 32 e.g. in Figs. 1 and 3) that forms with membrane 18 (in a closed operative state of the emitter) a regulating chamber 34 of the emitter (see, e.g., regulating chamber 34 in Fig. 4A). From regulating chamber 34 / recess 32 - the liquid flows back upwards via an exit 30 of the emitter into exit pool 20 and from there onwards downstream to exit the pipe (via an aperture, slit, or the like) in order to transfer substances to an ambient environment (such as soil or the like) outside of such pipe. Such transfer of substances (e.g. liquids nutrients or the like) may be for irrigation purposes or any other suitable required purpose.

Although flap 14 is illustrated herein as including, inter alia, elements such as membrane 18 and frame 16 - in various embodiments, flap 14 may be arranged to include additional elements of the emitter. For example, flap 14 may be configured to include also inlet 24 and/or possibly substantially most of the emitter's elements forming, belonging and/or associated to the emitter's inner side 15. In addition, hinge 17 herein illustrated as extending along a longitudinal side extension 19 of the emitter, may be arranged to extend along a shorter lateral extension 21 of the emitter (see extensions 19, 21 indicated in Fig. 2A).

Attention is additionally drawn to Figs. 3, 4A and 4B. In Fig. 3 emitter 10 is illustrated in its open non-operative state (as in Fig. 1) prior to being urged to its closed operative state seen in Figs. 2 by rotating flap 14 and/or body 12 about hinge 17. Recess 32 may be bound by a raised rim 36 (see also Fig. 1) that is formed about its perimeter and that extends above body region 52. Fig. 4A is a section of the emitter in its closed operative state illustrating the emitter's regulating chamber 34 that is formed by membrane 18 being pressed against rim 36 to overlay/seal recess 32.

The embodiment of membrane 18 illustrated in Figs. 3, 4A and 4B is seen including a possible convex bulging portion 38, which in the closed operative state of the emitter (see Fig. 4A) is configured to slightly bulge into recess 32. Fig. 4B provides a view of a mold segment 40 that may be used for forming the membrane embodiment illustrated in Figs. 3 and 4A.

Mold segment 40 seen in Fig, 4B may be a segment that can be used during an injection molding process of emitter 10. Mold segment 40 may possibly be a movable mold segment that may be moved to a position within a mold forming the emitter - after a prior injection molding phase in which frame 16 surrounding the membrane was formed by injection molding. In certain cases, mold segment 40 may be a static mold segment as in the illustrated examples - where an opposing mold segment (not shown) may be movable to form the cavity for the membrane.

It is noted that other partitions, mold parts (and the like) may typically be used in a molding process forming membrane 18, however these have not been illustrated in Fig. 4B. In addition, mold segment 40 may extend about further portions surrounding a cavity in which membrane 18 illustrated in Fig, 4B is formed by injection molding.

Mold segment 40 includes a face 42 that at least a portion of the molten material forming membrane 18 can meet during the injection molding phase of the membrane. Face 42 as here illustrated includes a concave portion and molten material filling a mold cavity including face 42 will be urged to form convex portion 38 of the membrane as it meets the concave area of face 42. Thus, membrane 18 in its normal unstressed state after injection molding may be configured to embody a geometry including convex portion 38.

With attention drawn back to Fig. 4A, membrane 18 in the closed operative state of the emitter is accordingly seen including convex portion 38 slightly bulging into recess 32 as it forms the emitter's regulating chamber 34. It is noted that membrane 18 in the state seen in Fig. 4A may be slightly stressed away from cavity 32 due its possible bearing pressed engagement against raised rim 36 that surrounds cavity 32. In any case, in at least certain emitter/membrane embodiments - the bulging condition of membrane 18 into cavity 32 may be due to membrane being urged to maintain and/or re-assume its unstressed state that in certain cases includes convex/bulging portion 38.

The pressing engagement of the membrane against raised rim 36 may be required in certain embodiments in order to seal the periphery of the regulating chamber against rim 36 so that the regulating chamber can function properly for regulating the flow of liquid exiting emitter 10.

Such pressing engagement of membranes that may be required in some cases for effectively sealing a cavity of a regulating chamber, may result in some membranes being urged to possibly flex away from such cavity. **In** membranes lacking a convex portion (such as portion 38), this may possibly result in such membranes being urged to flex to a position where then may even bulge away from their respective cavities to an extent schematically illustrated by the 'dashed lines' in Fig. 4A.

If this was to occur, the effectiveness of such membranes in regulating liquid flow through an emitter may be harmed, since effective flow regulation typically occurs as a distance D, e.g., decreases between the membrane and a face of cavity 32 adjacent exit 30 as the membrane flexes inwards due to rise in pressure liquid in the pipe. Thus, membranes starting off from a position as that generally illustrated by the 'dashed lines' in Fig, 4A, may initially be required to flex back towards a state where they start to bulge into cavity 32 before effective regulation can commence.

In at least certain embodiments of the invention, the slight natural bulging condition of membrane 18 into cavity 32 due to convex portion 38 may assist in mitigating such outcome as discussed. Since also in cases where the membrane may be urged to flex away from the cavity, the pre-defined bulging of the membrane (in its substantial unstressed condition) into cavity 32, may position the membrane at a better starting point for early entry into effective liquid flow regulation upon start of rise in liquid pressure in the pipe.

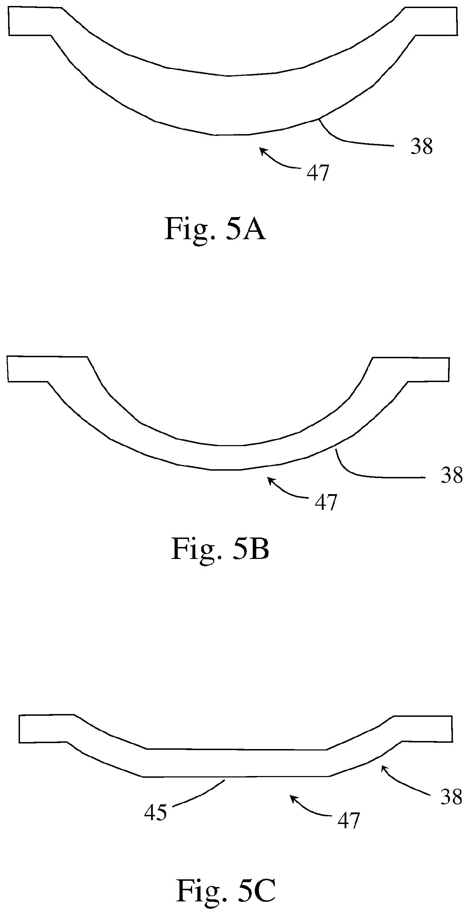

With attention drawn to Figs. 5A to 5C various membrane embodiments are shown possibly used in drip emitters generally similar to those in e.g. Figs. 1 and 2. In Figs. 5A and 5B, the membranes are seen having varying thickness in convex portion 38 as it bulges towards an apex 47 of the membrane configured to be placed generally above exit 30 of the emitter in the emitter's operative state. In Fig. 5A the thickness appears to increase while in Fig. 5B to decrease as convex portion 38 reaches closer to apex 47.

In Fig. 5C, a membrane embodiment is seen including an upper generally flattened area 45 generally at the membrane's apex 47. Such flattened area 45 in certain cases, may assist in facilitating effective pressure regulation in a drip emitter including such membrane, by defining generally two parallel planes, one area 45 and the other a region 70 adjacent exit 30 of the emitter - between which outward flow regulation is controlled as distance D decreases or increases.

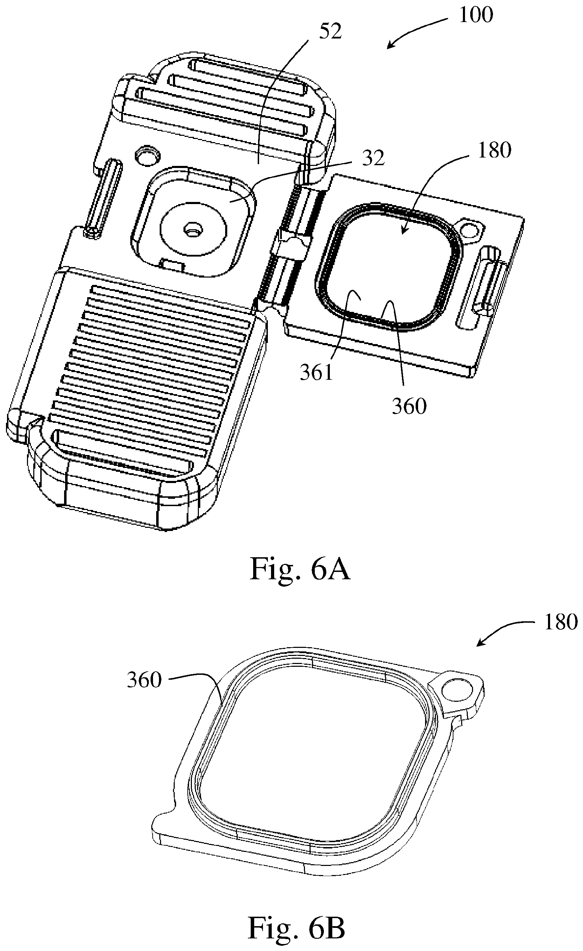

Attention is drawn to Figs. 6A and 6B illustrating an embodiment of a drip emitter 100 that may differ from emitter 10 in absence of the raised rim around recess 32 upon which the sealing of the recess in the operative state of emitter 10 may possibly occur. Emitter 100 may further differ from the former emitter (emitter 10) in inclusion of a membrane embodiment 180 that may comprise a raised peripheral wall 360 on its side that faces recess 32 in the emitter's operative state. Peripheral wall 360 may be arranged to project up from an otherwise generally planar face 361 of the membrane. Thus, in an aspect of the invention, sealing of the regulating chamber of emitter 100 may be embodied by peripheral wall 360 of membrane 180 being arranged to press against a surface possibly constituting and/or including body region 52 that surrounds recess 32 in the emitter's operative state.

In certain embodiments (not shown) emitter 100 may include a raised rim (such as rim 36) around its recess 32 upon which the sealing of the recess in the operative state of emitter 10 may possibly occur, and such sealing in emitter 100 may include the membrane's peripheral wall 360 being arranged to at least partially press against the raised rim.

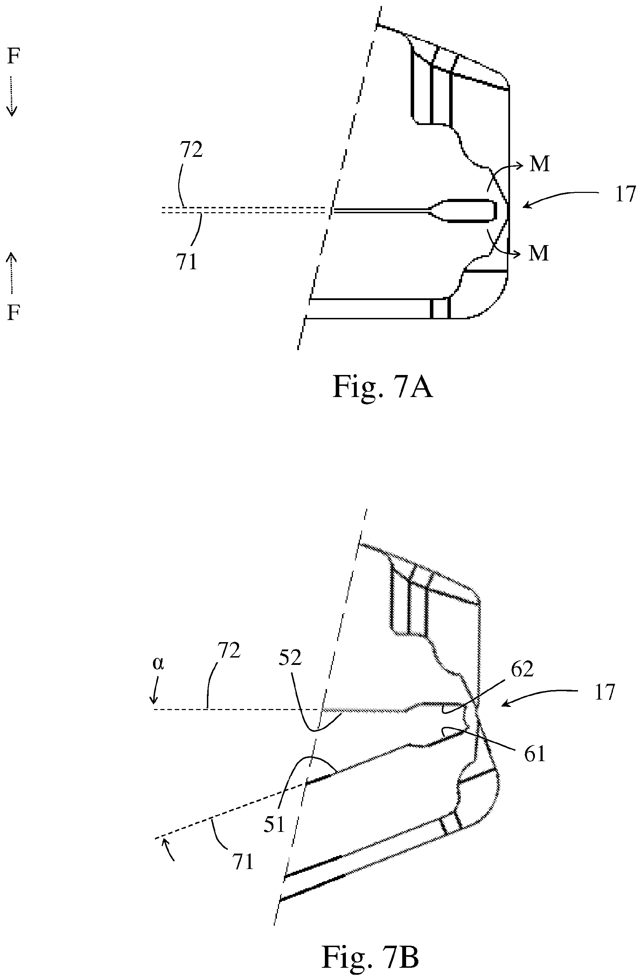

Attention is drawn to Figs. 7A and 7B each illustrating a similar cross sectional view of an emitter embodiment (generally similar e.g. to emitters 10 or 100). These views illustrate an area of the emitter adjacent hinge 17. In Fig. 7A the emitter is seen in its closed operative state where e.g. regions 51, 52 are placed adjacently each other, and in Fig. 7B the emitter is seen in a relative slightly open state where e.g. the regions 51, 52 are slightly spaced apart about hinge 17. Also seen and indicated in these figures (as also in Fig. 1) are body and flap depressions 62, 61 formed, respectively, on opposing sides of hinge 17 adjacent body and flap regions 52, 51.

In the view of Fig. 7A respective planes 71, 72 extending from and/or including regions 51, 52 are marked by the dashed lines. Preferably, planes 71, 72 extend and/or include areas of regions 51, 52 most proximal to hinge 17, possibly adjacent depressions 61, 62; to thus provide a measure of an angle α representative of an opening angle exhibited at or adjacent to the hinge 17. In Fig. 7A these planes 71 72 are seen generally parallel to each other. Such condition may be generally representative of a closed operative state of an emitter. In the view of Fig. 7B these respective 'dashed' marked planes 71, 72 are seen spaced apart about hinge 17 forming an angle α greater than "zero".

Hinge 17 is designed to guide flap 14 and body 12 towards each other to form the emitter's operative closed state where, inter alia, regions 51, 52 are placed in abutting or near abutting relation close together as seen in Fig. 7A. In this operative state, the flap and body are configured to, respectively, place membrane 18 in pressing engagement against rim 36 (as in emitter 10) and/or peripheral wall 360 of membrane 180 in pressing engagement against an area surrounding recess 32 (as in emitter 100) - in order to seal the emitter's regulating chamber 34 - while the closed operative state can be maintained by the emitter's fixation means 37.

In certain embodiments, the emitter in areas at or adjacent hinge 17 - may be configured once forming the closed operative state - to impose limited (or substantially no) moment forces M acting to urge the flap and body away from each other about the hinge towards a more open state.

**In** the illustrated embodiments, such moment forces M if exceeding certain values may act e.g. to distort/bias slightly the emitter's body and flap away from each other (while flap and body are maintained fixed together by fixation means 37). Such distortion/bias, inter alia, also in regions 51, 52 - may possibly reduce the pressing engagement between membrane 18 and rim 36 (in emitter 10) and/or wall 360 against area around recess 32 (in emitter 100) and consequently possibly harm the sealing of the regulating chamber 34 that may be required for proper pressure regulation of the emitter.

Such formation of moment forces M may at least partially be mitigated in certain embodiments, by hinge 17 being designed to undergo relative large plastic deformations while flap 14 and/or base 12 are first pivoted towards each other about the hinge. This first pivoting of the base and/or flap towards each other may be from a state/condition of the emitter (such as that seen in Fig. 3) representative of the emitter after e.g. the base, flap and membrane have been molded by injection molding. This first pivoting may be formed within the mold prior to extraction of the molded emitter from the mold. In some cases, this stage of first pivoting may be performed after the molded emitter exited the mold in the state generally seen in Fig. 3.

Relative large plastic deformations occurring within the hinge - may consequently limit presence of substantial elastic forces within (or in the region of) the hinge that may contribute to formation of the discussed moment forces M. Such hinge configuration designed to undergo large plastic deformation may consequently reduce likelihood of harm to the sealing of the regulating chamber 34.

In some embodiments (possibly combinable with the former), an emitter with a hinge region 17 designed for reduced formation of the discussed moment forces M may be defined by the following test. An emitter with no prior pivoting of the flap and/or base about hinge may first be urged to a position generally similar to that see in Fig. 7A where the regions 51, 52 generally abut or are in close abutment relation. In the discussed test, the urging of the flap and/or base about the hinge may be executed by applying forces F acting to urge this closing movement at a distal location to the hinge possibly adjacent areas of the emitter proximal to where cooperating members of the fixations means are present on the body and flap. Without having the fixation means 37 fix the base to flap, these both elements are then left to flex back away from each other to a position generally illustrated in Fig. 7B resulting in angle α formed between planes 71, 72. The biasing force urging this flexing of the base and flap away from each other may be substantially due to the moment forces M present in the hinge.

In tests performed by the inventors it has been found that an emitter exhibiting a moment force M less likely to undermine the sealing of the regulating chamber - is observed to form an angle α less than about 35 degrees and preferably less than about 30 degrees. The above angle criteria of α may be taken as representative to the amount of plastic deformation subjected to hinge 17 and hence the residual elastic deformation left in the hinge 17 after such plastic deformation.

In some embodiments (possibly combinable with one or more of the former hinge embodiments), relative small formation of the above discussed moment forces M may be defined by a hinge 17 having a minimal width H generally less than about 0.4 millimeter and preferably larger than about 0.15 millimeters. See width H indicated in the encircled section at the lower right-hand side of Fig. 3.

In yet a further embodiment (possibly combinable with one or more of the former hinge embodiments), presence of the depressions 61, 62 adjacent the hinge may assist in improving placement of the regions 51, 52 adjacent to each other in the closed operative state of the emitter. These depressions 61, 62 identifiable also in the emitter's closed state, space the regions 51, 52 from hinge 17 and hence limit the moment forces M that may arise due to materials adjacent to the hinge being made to meet each other. In the shown example, these depressions 61, 62 are shown on both sides of the hinge 17, however in certain embodiments, presence of only one of the depressions 61 or 62 may be sufficient in mitigating the discussed formation of moment forces M and consequently the mentioned outcome of harm to the sealing of the regulating chamber.

In the description and claims of the present application, each of the verbs, "comprise" "include" and "have", and conjugates thereof, are used to indicate that the object or objects of the verb are not necessarily a complete listing of members, components, elements or parts of the subject or subjects of the verb.

Further more, while the present application or technology has been illustrated and described in detail in the drawings and foregoing description, such illustration and description are to be considered illustrative or exemplary and non-restrictive; the technology is thus not limited to the disclosed embodiments. Variations to the disclosed embodiments can be understood and effected by those skilled in the art and practicing the claimed technology, from a study of the drawings, the technology, and the appended claims.

In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measures can not be used to advantage.

The present technology is also understood to encompass the exact terms, features, numerical values or ranges etc., if in here such terms, features, numerical values or ranges etc. are referred to in connection with terms such as "about, ca., substantially, generally, at least" etc. In other words, "about 3" shall also comprise "3" or "substantially perpendicular" shall also comprise "perpendicular". Any reference signs in the claims should not be considered as limiting the scope.

Although the present embodiments have been described to a certain degree of particularity, it should be understood that various alterations and modifications could be made without departing from the scope of the invention as hereinafter claimed.

## Claims

1. A drip emitter (10) comprising a flexible membrane (18) for regulating a flow of liquid exiting the emitter, wherein the membrane (18) in a non-stressed or non-flexed state into a regulating chamber (34) of the emitter comprises a non-planar portion surrounding or overlaying the regulating chamber,
the drip emitter being formed from at least two parts (12, 14) hinged to each other, a first one of the parts (12) comprising a recess (32) and a second one of the parts comprising the membrane and being pivoted towards the first part to form an operative state of the emitter (10) suitable for irrigation, wherein in the operative state at least a portion of the membrane covers the recess to form the regulating chamber (34) of the emitter,
and wherein in the operative state at least a portion of the non-planar portion of the membrane (18) is arranged to bulge into the recess (32) also when the emitter is not exposed to external pressure at its inlet,
wherein the recess (32) is bound by a raised rim (36) that surrounds the recess (32) at its periphery and the membrane (18) is pressed against the raised rim (36) to substantially seal the recess and regulating chamber (34) at the raised rim (36).

2. The drip emitter of claim 1, wherein the non-planar portion comprises a generally free-form shape.

3. The drip emitter of claim 1 or 2, wherein the non-planar portion comprises a generally plane curve shape, preferably a smooth plane curve shape.

4. The drip emitter of any one of the preceding claims, wherein the non-planar portion is a convex portion (38).

5. The drip emitter of any one of the preceding claims, wherein the non-planar portion comprises a peripheral raised wall, preferably projecting up from an otherwise generally planar face.

6. The drip emitter according to any one of the preceding claims and comprising an exit (30) through which liquid in the regulating chamber (34) can be emitted out of the emitter (10), and the non-planar portion of the membrane (18) being arranged to bulge towards the exit (30) and comprise a flattened area at an area most proximal to the exit.

7. The drip emitter according to claim 6, wherein the flattened area of the membrane (18) and an area of the recess (32) surrounding the exit are generally parallel one to the other at least in a generally non-flexed state of the membrane (18).

8. A bi-component molding process for forming a drip emitter (10) according to any one of the preceding claims and comprising the steps of:
providing a mold comprising first and second mold segments, the first mold segment (40) defining at least part of a cavity for the membrane (18) of the emitter, the first mold segment comprising a face (42) facing into the cavity, wherein at least a portion of the face (42) is non-planar,
injecting molten material into the cavity for forming the membrane (18) so that molten material contacting the non-planar face is configured to assume a geometry corresponding to the non-planar face of the cavity, wherein the formed non-planar part of the membrane (18) is also present in a non-stressed state of the final produced membrane,
the second mold segment being for injection molding at least a portion of a housing (7) of the emitter (10), the least portion of the housing (7) comprises the recess (32) and the raised rim (36) that surrounds the recess (32) at its periphery, wherein
the membrane (18) being configured to overlay the recess (32) in the operative state of the final produced emitter suitable for drip irrigation, and wherein at least a portion of the non-planar part of the membrane (18) being located above the recess (32) while bulging into the recess also in a non-stressed or non-flexed state of the membrane (18) when the emitter (10) is not exposed to external pressure at its inlet.

9. The molding process of claim 8, wherein the at least portion of the housing (7) is configured to be attached to the membrane in the final produced emitter.

10. The molding process of claim 9, wherein molding the at least portion of the housing (7) is prior to molding the membrane.

11. The molding process of claim 9, wherein molding the membrane (18) is prior to molding the at least portion of the housing (7).

12. The molding process of any one of claims 9 to 11, wherein non-planar is generally free-form in shape.

13. The molding process of any one of claim 9 to 12, wherein non-planar is generally plane curve in shape, preferably a smooth plane curve in shape.

14. The molding process of any one of claim 9 to 13, wherein non-planar in the membrane face facing towards the recess is convex in shape.

## Patentansprüche

1. Tropfenabgabevorrichtung (10) mit einer flexiblen Membran (18) zum Regulieren des Flusses einer aus der Abgabevorrichtung austretenden Flüssigkeit, wobei die Membran (18) in einem nicht gespannten oder nicht gebogenen Zustand in einer Regulierkammer (34) der Abgabevorrichtung einen nicht-ebenen Abschnitt aufweist, der die Regulierkammer umgibt oder überlagert,
wobei die Tropfenabgabevorrichtung aus mindestens zwei Teilen (12, 14) gebildet ist, die gelenkig miteinander verbunden sind, wobei ein erstes der Teile (12) eine Vertiefung (32) aufweist und ein zweites der Teile die Membran aufweist und zum ersten Teil hin schwenkbar ist, um einen für eine Bewässerung geeigneten Betriebszustand der Abgabevorrichtung (10) zu bilden, wobei im Betriebszustand mindestens ein Abschnitt der Membran die Vertiefung abdeckt, um die Regulierungskammer (34) der Abgabevorrichtung zu bilden, und
wobei im Betriebszustand mindestens ein Teil des nicht-ebenen Abschnitts der Membran (18) derart angeordnet ist, dass er sich auch dann in die Vertiefung (32) hineinwölbt, wenn die Abgabevorrichtung an ihrem Einlass keinem äußeren Druck ausgesetzt ist,
wobei die Vertiefung (32) durch einen erhöhten Rand (36) begrenzt wird, der die Vertiefung (32) an ihrem Umfang umgibt, und wobei die Membran (18) gegen den erhöhten Rand (36) gedrückt wird, um die Vertiefung und die Regulierkammer (34) am erhöhten Rand (36) im Wesentlichen abzudichten.

2. Tropfenabgabevorrichtung nach Anspruch 1, wobei der nicht-ebene Abschnitt eine allgemein freie Form hat.

3. Tropfenabgabevorrichtung nach Anspruch 1 oder 2, wobei der nicht-ebene Abschnitt eine allgemein ebene Kurvenform, vorzugsweise eine glatte ebene Kurvenform, aufweist.

4. Tropfenabgabevorrichtung nach einem der vorangehenden Ansprüche, wobei der nicht-ebene Abschnitt ein konvexer Abschnitt (38) ist.

5. Tropfenabgabevorrichtung nach einem der vorangehenden Ansprüche, wobei der nicht-ebene Abschnitt eine umlaufende erhöhte Wand aufweist, die vorzugsweise von einer ansonsten allgemein ebenen Fläche nach oben hervorsteht.

6. Tropfenabgabevorrichtung nach einem der vorangehenden Ansprüche, aufweisend einen Auslass (30), über den Flüssigkeit in der Regulierkammer (34) aus der Abgabevorrichtung (10) abgegeben werden kann, wobei der nicht-ebene Abschnitt der Membran (18) derart angeordnet ist, dass er sich zum Auslass (30) hin wölbt und einen abgeflachten Bereich an einer Stelle aufweist, die dem Auslass am nächsten liegt.

7. Tropfenabgabevorrichtung nach Anspruch 6, wobei der abgeflachte Bereich der Membran (18) und ein Bereich der den Auslass umgebenden Vertiefung (32) zumindest in einem allgemein nicht gebogenen Zustand der Membran (18) allgemein parallel zueinander verlaufen.

8. Zweikomponenten-Formverfahren zum Formen einer Tropfenabgabevorrichtung (10) nach einem der vorangehenden Ansprüche, aufweisend die Schritte:
Bereitstellen einer Form, die ein erstes und ein zweites Formsegment aufweist, wobei das erste Formsegment (40) mindestens einen Teil eines Hohlraums für die Membran (18) der Abgabevorrichtung definiert, wobei das erste Formsegment eine Fläche (42) aufweist, die dem Hohlraum zugewandt ist, wobei mindestens ein Teil der Fläche (42) nicht planar ist,
Einspritzen von geschmolzenem Material in den Hohlraum zum Formen der Membran (18), so dass das geschmolzene Material, das mit der nicht-ebenen Fläche in Kontakt kommt, dafür konfiguriert ist, eine Geometrie anzunehmen, die der nicht-ebenen Fläche des Hohlraums entspricht, wobei der geformte nicht-ebene Teil der Membran (18) auch in einem nicht-gespannten Zustand der endgefertigten Membran vorhanden ist,
wobei das zweite Formsegment zum Spritzgießen mindestens eines Abschnitts eines Gehäuses (7) der Abgabevorrichtung (10) dient, wobei der mindestens eine Abschnitt des Gehäuses (7) die Vertiefung (32) und den erhöhten Rand (36) aufweist, der die Vertiefung (32) an ihrem Umfang umgibt, wobei
die Membran (18) dafür konfiguriert ist, die Vertiefung (32) im Betriebszustand der endgefertigten Abgabevorrichtung zu überlagern, der für die Tropfbewässerung geeignet ist, und wobei mindestens ein Abschnitt des nicht ebenen Teils der Membran (18) über der Vertiefung (32) angeordnet ist, während er sich auch in einem nicht gespannten oder nicht gebogenen Zustand der Membran (18), wenn die Abgabevorrichtung (10) an ihrem Einlass keinem äußeren Druck ausgesetzt ist, in die Vertiefung hineinwölbt.

9. Formverfahren nach Anspruch 8, wobei der mindestens eine Abschnitt des Gehäuses (7) dafür konfiguriert ist, in der endgefertigten Abgabevorrichtung an der Membran angebracht zu werden.

10. Formverfahren nach Anspruch 9, wobei das Formen des mindestens einen Abschnitts des Gehäuses (7) vor dem Formen der Membran erfolgt.

11. Formverfahren nach Anspruch 9, wobei das Formen der Membran (18) vor dem Formen des mindestens einen Abschnitts des Gehäuses (7) erfolgt.

12. Formverfahren nach einem der Ansprüche 9 bis 11, wobei nicht planar allgemein eine freie Form bedeutet.

13. Formverfahren nach einem der Ansprüche 9 bis 12, wobei die nicht ebene Form allgemein eine ebene Kurve ist, vorzugsweise eine glatte ebene Kurve.

14. Formverfahren nach einem der Ansprüche 9 bis 13, wobei die nicht ebene Form in der der Vertiefung zugewandten Membranfläche eine konvexe Form ist.

## Revendications

1. Émetteur goutte-à-goutte (10) comprenant une membrane flexible (18) pour réguler un écoulement de liquide sortant de l'émetteur, dans lequel la membrane (18) comprend, dans un état non contraint ou non fléchi dans une chambre de régulation (34) de l'émetteur, une section non plane entourant ou recouvrant la chambre de régulation,
l'émetteur goutte-à-goutte étant formé d'au moins deux parties (12, 14) articulées l'une avec l'autre, une première des parties (12) comprenant un renfoncement (32) et une deuxième des parties comprenant la membrane et étant pivotée vers la première partie pour former un état opérationnel de l'émetteur (10) adapté à l'irrigation, dans lequel, dans l'état opérationnel, au moins une section de la membrane recouvre le renfoncement pour former la chambre de régulation (34) de l'émetteur et dans lequel, dans l'état opérationnel, au moins une section de la section non plane de la membrane (18) est agencée pour faire saillie dans le renfoncement (32) même lorsque l'émetteur n'est pas exposé à une pression externe au niveau de son entrée,
dans lequel le renfoncement (32) est délimité par un rebord surélevé (36) qui entoure le renfoncement (32) à sa périphérie et la membrane (18) est pressée contre le rebord surélevé (36) pour sceller sensiblement le renfoncement et la chambre de régulation (34) au niveau du rebord surélevé (36).

2. Émetteur goutte-à-goutte selon la revendication 1, dans lequel la section non plane présente une forme généralement libre.

3. Émetteur goutte-à-goutte selon la revendication 1 ou 2, dans lequel la section non plane présente une forme courbe généralement plane, de préférence une forme courbe plane lisse.

4. Émetteur goutte-à-goutte selon l'une quelconque des revendications précédentes, dans lequel la section non plane est une section convexe (38).

5. Émetteur goutte à goutte selon l'une quelconque des revendications précédentes, dans lequel la section non plane comprend une paroi périphérique surélevée, de préférence faisant saillie vers le haut à partir d'une face par ailleurs généralement plane.

6. Émetteur goutte-à-goutte selon l'une quelconque des revendications précédentes comprenant une sortie (30) à travers laquelle le liquide dans la chambre de régulation (34) peut être émis hors de l'émetteur (10), et la section non plane de la membrane (18) étant agencée pour faire saillie vers la sortie (30) et comprendre une zone aplatie au niveau d'une zone la plus proche de la sortie.

7. Émetteur goutte à goutte selon la revendication 6, dans lequel la zone aplatie de la membrane (18) et une zone du renfoncement (32) entourant la sortie sont généralement parallèles l'une à l'autre au moins dans un état généralement non fléchi de la membrane (18).

8. Procédé de moulage à deux composants pour former un émetteur goutte-à-goutte (10) selon l'une quelconque des revendications précédentes comprenant les étapes consistant à :
fournir un moule comprenant des premier et deuxième segments de moule, le premier segment de moule (40) définissant au moins une partie d'une cavité pour la membrane (18) de l'émetteur, le premier segment de moule comprenant une face (42) tournée vers l'intérieur de la cavité dans lequel au moins une section de la face (42) n'est pas plane,
injecter un matériau fondu dans la cavité pour former la membrane (18) de telle sorte que le matériau fondu en contact avec la face non plane soit configuré pour adopter une géométrie correspondant à la face non plane de la cavité, dans lequel la partie non plane formée de la membrane (18) est également présente dans un état non contraint de la membrane finale produite,
le deuxième segment de moule étant destiné au moulage par injection d'au moins une section d'un boîtier (7) de l'émetteur (10), la au moins une section du boîtier (7) comprenant le renfoncement (32) et le rebord surélevé (36) qui entoure le renfoncement (32) à sa périphérie, dans lequel
la membrane (18) est configurée pour recouvrir le renfoncement (32) dans l'état de fonctionnement de l'émetteur final produit adapté à l'irrigation goutte à goutte, et dans lequel au moins une section de la partie non plane de la membrane (18) est située au-dessus du renfoncement (32) tout en faisant saillie dans le renfoncement également dans un état non contraint ou non fléchi de la membrane (18) lorsque l'émetteur (10) n'est pas exposé à une pression externe à son entrée.

9. Procédé de moulage selon la revendication 8, dans lequel l'au moins une section du boîtier (7) est configurée pour être fixée à la membrane dans l'émetteur final produit.

10. Procédé de moulage selon la revendication 9, dans lequel le moulage de l'au moins une section du boîtier (7) précède le moulage de la membrane.

11. Procédé de moulage selon la revendication 9, dans lequel le moulage de la membrane (18) précède le moulage de l'au moins une section du boîtier (7).

12. Procédé de moulage selon l'une quelconque des revendications 9 à 11, dans lequel la section non plane est généralement une forme libre.

13. Procédé de moulage selon l'une quelconque des revendications 9 à 12, dans lequel la section non plane est généralement une forme courbe plane, de préférence une forme courbe plane lisse.

14. Procédé de moulage selon l'une quelconque des revendications 9 à 13, dans lequel la section non plane de la face de la membrane tournée vers le renfoncement est une forme convexe.
